# EUROPÄISCHE PATENTSCHRIFT

(11) **EP 1 899 589 B1**
(45) Veröffentlichungstag und Bekanntmachung des Hinweises auf die Patenterteilung: **15.08.2012**
(21) Anmeldenummer: 06754034.4
(22) Anmeldetag: 01.06.2006
(51) Int. Cl.: F02B 29/04, F01P 3/00, F01P 11/04, F28D 1/03

(54) **LADELUFTKÜHLER**
CHARGE AIR INTERCOOLER
REFROIDISSEUR D'AIR DE SURALIMENTATION

(30) Priorität: 03.06.2005 DE 102005025959
(43) Veröffentlichungstag der Anmeldung: 19.03.2008
(73) Patentinhaber: Behr GmbH & Co. KG, 70469 Stuttgart (DE)
(72) Erfinder: HENDRIX, Daniel, 70374 Stuttgart (DE); MODERAU, Klaus, 70499 Stuttgart (DE)
(74) Vertreter: Grauel, Andreas
(86) Internationale Anmeldenummer: PCT/EP2006/005224
(87) Internationale Veröffentlichungsnummer: WO 2006/128701

(56) Entgegenhaltungen:
- EP-A- 1 342 893
- EP-A2- 1 170 478
- DE-A1- 10 328 746
- DE-A1- 10 347 068
- US-A- 5 758 718
- US-A1- 2004 118 389

## Beschreibung

Die Erfindung betrifft einen Ladeluftkühler gemäß dem Oberbegriff des Anspruches 1.

Zur Leistungssteigerung von Motoren werden Turbolader zur Verdichtung der Luft verwendet. Hierbei erfolgt jedoch eine Erwärmung der Luft, im Folgenden als Ladeluft bezeichnet, infolge der Kompression im Turbolader auf Temperaturen von über 150°C. Um eine derartige Lufterwärmung zu vermindern, werden Luftkühler verwendet, die vorne im Kühlmodul angeordnet sind und zur Kühlung der Ladeluft dienen. Die Ladeluft strömt dabei durch einen Wärmeübertrager, der von Umgebungsluft durchströmt und damit gekühlt wird. Dadurch ist eine Abkühlung der Ladeluft auf eine Temperatur möglich, die etwa 10-90 K über der Temperatur der Umgebungsluft liegt. Die Kühlung der Ladeluft ermöglicht eine Leistungssteigerung des Motors.

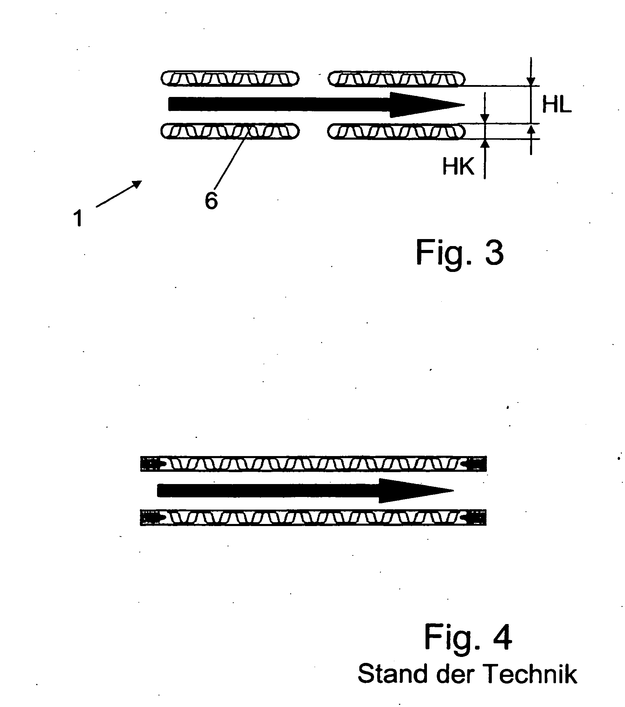

Um eine verbesserte Kühlung zu ermöglichen, werden immer häufiger bei Pkws kühlmittelgekühlte Ladeluftkühler verwendet. Diese sind im Falle einer Kompressor-Aufladung, bedingt auch bei einer Turbo-Aufladung, direkt im Ansaugbereich (bzw. im Kompressorgehäuse) angeordnet. Ein Beispiel eines derartigen bekannten Ladeluftkühlers ist ausschnittsweise im Schnitt in Fig. 4 dargestellt. Der Ladeluftkühler besteht aus einer Mehrzahl von Blechen und Profilelementen, die zu Strömungskanälen für das Kühlmittel verbunden sind und mit ihren Enden in Sammelkästen ragen. Zwischen den Strömungskanälen für das Kühlmittel strömt die zu kühlende Ladeluft quer zur Strömungsrichtung des Kühlmittels in den Strömungskanälen. Diese Ladeluftkühler sind jedoch auf Grund des hohen Gewichts und der relativ aufwendigen Herstellung teuer. Ferner lässt die Wärmeübertragung zu wünschen.

Aus der DE 103 28 746 A1 ist eine Vorrichtung zum mehrstufigen Wärmertausch und ein Verfahren zur Herstellung einer derartigen Vorrichtung bekannt.

Die EP 1170 478 A2 offenbart ein Kompressorgehäuse, das mit einem Ausanggehäuse urbunden istand einen ladeluffkühler aufweist. Die US 2004/0118389 A1 offenbart einen Turbolader mit hadelkuft kühler.

Ausgehend von diesem Stand der Technik ist es Aufgabe der Erfindung, einen verbesserten Ladeluftkühler zur Verfügung zu stellen. Diese Aufgabe wird gelöst durch einen Ladeluftkühler mit den Merkmalen des Anspruchs 1. Vorteilhafte Ausgestaltungen sind Gegenstand der Unteransprüche.

Erfindungsgemäß ist ein Ladeluftkühler, insbesondere für einen Pkw, vorgesehen, in welchem Ladeluft durch ein in Strömungskanälen strömendes Kühlmittel gekühlt werden kann, wobei die Strömungskanäle für das Kühlmittel durch Flachrohre gebildet sind. Im Gegensatz zu herkömmlichen Ladeluftkühlern verringert sich durch die Verwendung von Flachrohren die Teilezahl, so dass eine einfachere Herstellung möglich ist.

Vorzugsweise sind die Flachrohre in mindestens einer Reihe angeordnet. Dabei erfolgt bevorzugt eine Umlenkung der Kühlmittelströmung in der Breite und/oder der Tiefe des Ladeluftkühlers.

Um einen guten Wirkungsgrad zu ermöglichen beträgt das Verhältnis von Ladeluftkanalhöhe zu Kühlmittelkanalhöhe vorzugsweise 1:1 bis 4:1, insbesondere 2:1 bis 3:1. In einer anderen vorteilhaften Ausgestaltung beträgt das Verhältnis von Ladeluftkanalhöhe zu Kühlmittelkanalhöhe 1:1 bis 10:1, insbesondere 2:1 bis 8:1.

Um die Wärmeübertragung zu verbessern sind bevorzugt mindestens zwei Reihen von Flachrohren vorgesehen, die im Kreuzstrombetrieb oder im Kreuzgegenstrombetrieb zur zu kühlenden Ladeluft durchströmbar sind. Alternativ sind einzelne Kammern der Flachrohre im Kreuzstrombetrieb durchströmbar, insbesondere wenn nur eine Flachrohrreihe vorgesehen ist.

Die Herstellung wird zudem dadurch vereinfacht, dass die einzelnen Bauteile des Ladeluftkühlers einschließlich der Kühlmittelkästen miteinander verlötet sind, wobei bevorzugt das Verlöten in einem Arbeitsgang erfolgt.

In den Flachrohren sind vorzugsweise Turbulenzeinlagen angeordnet, um das Kühlmittel zu mischen und dadurch den Wärmeaustausch zu verbessern.

Die Flachrohre enden in mindestens einem Sammelkasten, wobei es sich bevorzugt um einen tiefgezogenen, aus einem Blech gefertigten Sammelkasten handeln kann, der einen aus einem Blech gefertigten Boden mit Öffnungen für die Flachrohre aufweisen kann. Im Sammelkasten können Leitelemente und/oder Trennwände vorgesehen sein, um das Kühlmittel zu leiten und auf die Flachrohre zu verteilen.

Die Öffnungen im Boden entsprechen bevorzugt den Außenabmessungen der Flachrohre, und die Böden sind mit den in die Öffnungen gesteckten Flachrohren verlötet.

Zwischen den Flachrohren sind bevorzugt Wellrippen vorgesehen, welche die wärmeübertragende Oberfläche vergrößern und dadurch den Wärmeaustausch verbessern.

Als Kühlmittel wird bevorzugt eine Flüssigkeit, insbesondere Wasser, verwendet.

Um eine optimale Ausbildung der Ladeluftströmung zu ermöglichen ist vorzugsweise mindestens ein Ladeluftkasten vorgesehen, welchen die Ladeluft durchströmt.

Im Folgenden wird die Erfindung anhand eines Ausführungsbeispiels unter Bezugnahme auf die Zeichnung im Einzelnen erläutert. Es zeigen:
- Fig. 1: eine schematische perspektivische Explosionsdarstellung eines erfindungsgemäßen Ladeluftkühlers, teilweise ohne Seitenplatten,

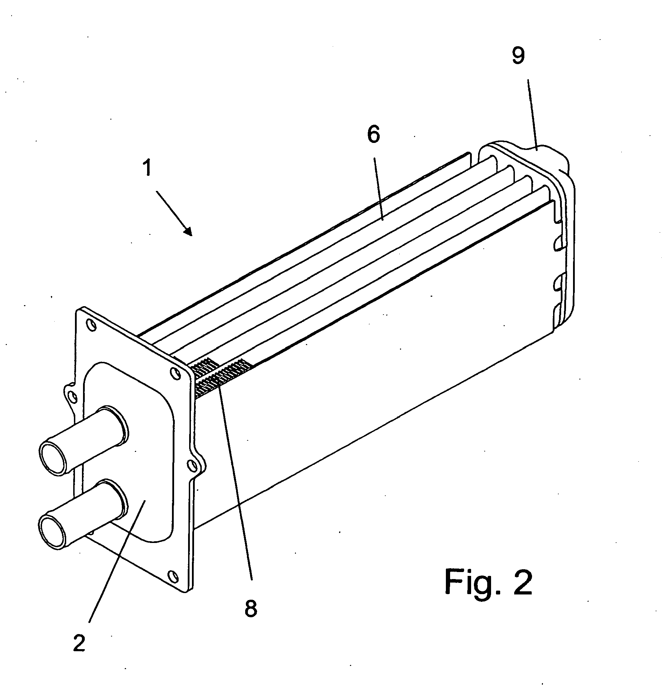

- Fig. 2: eine schematische perspektivische Darstellung des Ladeluftkühlers von Fig. 1 mit einer Befestigungsplatte im Bereich des Kühlmittelein- und -austritts,
- Fig. 3: einen schematischen, ausschnittsweise dargestellten Schnitt durch den Ladeluftkühler von Fig. 1, und
- Fig. 4: einen schematischen, ausschnittsweise dargestellten Schnitt durch einen Ladeluftkühler gemäß dem Stand der Technik.

Ein Ladeluftkühler 1 weist einen ersten Sammelkasten 2 bestehend aus einem tiefgezogenen ersten Teil 3 mit einem Kühlmitteleintritt 4 und einem Kühlmittelaustritt 5 und einem flachen, mit Langlöchern für Flachrohre 6 versehenen zweiten Teil 7 (Boden) auf, über den Kühlmittel (vorliegend Wasser) dem Ladeluftkühler 1 zu- und abgeführt wird, wie durch Pfeile angedeutet.

Im Inneren des ersten Sammelkastens 2 ist etwa mittig eine Trennwand (nicht dargestellt) vorgesehen, um eine Querströmung des Kühlmittels direkt vom Kühlmitteleintritt 4 zum Kühlmittelaustritt 5 zu verhindern. Zwischen den in die Langlöcher gesteckten Flachrohren 6, in denen Turbulenzeinlagen angeordnet sind, sind Wellrippen 8 zur Vergrößerung der wärmeübertragenden Fläche vorgesehen.

Auf der dem ersten Sammelkasten 2 gegenüberliegenden Seite der Flachrohre 6 ist ein zweiter Sammelkasten 9 angeordnet. Der zweite Sammelkasten 9 weist entsprechend dem ersten Sammelkasten 2 einen tiefgezogenen ersten Teil 10 und einem flachen, mit Langlöchern für Flachrohre 6 versehenen zweiten Teil 11 (Boden) auf, wobei der tiefgezogene erste Teil 10 keinen Kühlmitteleintritt 4 und Kühlmittelaustritt 5 aufweist, sondern lediglich das Kühlmittel von einer Flachrohrreihe zur nächsten Flachrohrreihe umlenkt.

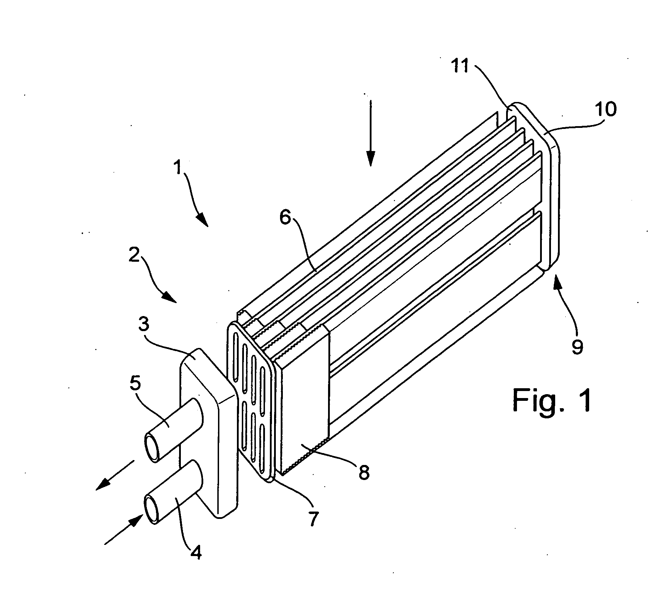

Der Ladeluftkühler 1 wird im gesamten Bereich zwischen den beiden Böden der Sammelkästen 2 und 9, wie durch einen großen Pfeil in Fig. 1 angedeutet, von zu kühlender Ladeluft durchströmt, wobei vorliegend das Kühlmittel im Gegen-Kreuzstrombetrieb im Wesentlichen senkrecht zur Ladeluft-Strömungsrichtung durch die Flachrohrreihen strömt.

Um einen möglichst guten Wirkungsgrad zu erhalten, ist die Höhe des Ladeluftkanals HL vorliegend ca. 2,5x so groß wie die Höhe des Kühlmittelkanals HK.

Vorliegend werden im Rahmen der Herstellung sämtliche Teile des Ladeluftkühlers 1 nach dem Zusammensetzen in einem einzigen Arbeitsgang miteinander verlötet.

Gemäß einer nicht in der Zeichnung dargestellten Variante ist nur eine einzige Flachrohrreihe vorgesehen. Hierbei sind in den Flachrohren Turbulenzeinlagen angeordnet, welche für eine bessere Vermischung des Kühlmittels sorgen.

Gemäß einer zweiten, nicht in der Zeichnung dargestellten Variante ist entsprechend der ersten Variante nur eine Flachrohrreihe mit Turbulenzeinlagen vorgesehen, jedoch sind die Flachrohre derart unterteilt ausgebildet, dass in Verbindung mit Trennwänden in den Sammelkästen ein Kreuzgegenstrombetrieb möglich ist.

Ein derartiger Ladeluftkühler, wie im Ausführungsbeispiel und den Varianten hierzu beschrieben, ist vorliegend direkt in das Ansauggehäuse integriert angeordnet, jedoch ist beispielsweise auch eine Anordnung im Kompressorgehäuse oder in einem eigenen Gehäuse möglich.

## Patentansprüche

1. Ladeluftkühler, insbesondere für einen Pkw, in welchem Ladeluft durch ein in Strömungskanälen strömendes Kühlmittel gekühlt werden kann, **dadurch gekennzeichnet, dass** die Strömungskanäle für das Kühlmittel durch Flachrohre (6) gebildet sind, wobei der Ladeluftkühler (1) in einem Ansauggehäuse angeordnet ist.

2. Ladeluftkühler nach Anspruch 1, **dadurch gekennzeichnet, dass** die Flachrohre (6) in mindestens einer Reihe angeordnet sind.

3. Ladeluftkühler nach Anspruch 1 oder 2, **dadurch gekennzeichnet, dass** in Strömungsrichtung der Ladeluft hintereinander angeordnet zwei oder mehr Flachrohrreihen vorgesehen sind.

4. Ladeluftkühler nach einem der vorhergehenden Ansprüche, **dadurch gekennzeichnet, dass** mindestens zwei Reihen von Flachrohren (6) vorgesehen sind, die im Kreuzstrombetrieb oder im Kreuzgegenstrombetrieb zur zu kühlenden Ladeluft durchströmbar sind und/oder dass einzelne Kammern der Flachrohre im Kreuzstrombetrieb durchströmbar sind.

5. Ladeluftkühler nach einem der vorhergehenden Ansprüche, **dadurch gekennzeichnet, dass** die einzelnen Bauteile des Ladeluftkühlers (1) miteinander verlötet sind.

6. Ladeluftkühler nach einem der vorhergehenden Ansprüche, **dadurch gekennzeichnet, dass** in den Flachrohren (6) Turbulenzeinlagen angeordnet sind.

7. Ladeluftkühler nach einem der vorhergehenden Ansprüche, **dadurch gekennzeichnet, dass** die Flachrohre (6) in mindestens einem Sammelkasten (2, 9) enden.

8. Ladeluftkühler nach Anspruch 7, **dadurch gekennzeichnet, dass** der Sammelkasten (2) einen Boden (7) mit Öffnungen aufweist, welche den Außenabmessungen der Flachrohre (6) entsprechen, und mit welchem die Flachrohre (6) verlötet sind.

9. Ladeluftkühler nach einem der vorhergehenden Ansprüche, **dadurch gekennzeichnet, dass** zwischen den Flachrohren (6) Wellrippen (8) vorgesehen sind.

10. Ladeluftkühler nach einem der vorhergehenden Ansprüche, **dadurch gekennzeichnet, dass** das Kühlmittel eine Flüssigkeit, insbesondere Wasser, ist.

11. Ladeluftkühler nach einem der vorhergehenden Ansprüche, **dadurch gekennzeichnet, dass** mindestens ein Luftkasten zur Führung der Ladeluft vorgesehen ist.

12. Ladeluftkühler nach einem der vorhergehenden Ansprüche, **dadurch gekennzeichnet, dass** das Verhältnis von Ladeluftkanalhöhe (HL) zu Kühlmittelkanalhöhe (HK) 1:1 bis 10:1, insbesondere 2:1 bis 8:1 beträgt.

## Claims

1. A charge air cooler, in particular for a passenger automobile, in which charge air can be cooled by a coolant flowing in flow channels, **characterized in that** the flow channels for the coolant are formed by flat tubes (6), the charge air cooler (1) being arranged in an intake housing.

2. The charge air cooler according to claim 1, **characterized in that** the flat tubes (6) are arranged in at least one row.

3. The charge air cooler according to claim 1 or 2, **characterized in that** two or more flat tube rows are provided arranged one after another in the flow direction of the charge air.

4. The charge air cooler according to one of the preceding claim, **characterized in that** at least two rows of flat tubes (6) are provided, through which the charge air to be cooled can flow in cross flow operation or in cross counter flow operation, and/or can flow through individual chambers of the flat tubes in cross flow operation.

5. The charge hair cooler according to one of the preceding claims, **characterized in that** the individual components of the charge air cooler (1) are soldered with one another.

6. The charge air cooler according to one of the preceding claims, **characterized in that** turbulence inserts are arranged in the flat tubes (6).

7. The charge air cooler according to one of the preceding claims, **characterized in that** the flat tubes (6) end in at least one manifold (2, 9).

8. The charge air cooler according to claim 7, **characterized in that** the manifold (2) has a floor (7) having openings, which correspond to the external dimensions of the flat tubes (6), and with which the flat tubes (6) are soldered.

9. The charge air cooler according to one of the preceding claims, **characterized in that** corrugated ribs (8) are provided between the flat tubes (6).

10. The charge air cooler according to one of the preceding claims, **characterized in that** the coolant is a liquid, in particular water.

11. The charge air cooler according to one of the preceding claims, **characterized in that** at least one airbox is provided for guiding the charge air.

12. The charge air cooler according to one of the preceding claims, **characterized in that** the ratio of charge air channel height (HL) to coolant channel height (HK) is 1:1 to 10:1, in particular 2:1 to 8:1.

## Revendications

1. Refroidisseur d'air de suralimentation, notamment pour une voiture particulière, dans lequel de l'air de suralimentation peut être refroidi par un moyen de refroidissement circulant dans des conduits d'écoulement, **caractérisé en ce que** les conduits d'écoulement prévus pour le moyen de refroidissement sont formés par des tubes plats (6), où le refroidisseur d'air de suralimentation (1) est disposé dans un carter d'aspiration.

2. Refroidisseur d'air de suralimentation selon la revendication 1, **caractérisé en ce que** les tubes plats (6) sont disposés sur au moins une rangée.

3. Refroidisseur d'air de suralimentation selon la revendication 1 ou 2, **caractérisé en ce qu'**il est prévu deux rangées de tubes plats, ou plus, disposées les unes derrière les autres dans la direction d'écoulement de l'air de suralimentation.

4. Refroidisseur d'air de suralimentation selon l'une quelconque des revendications précédentes, **caractérisé en ce qu'**il est prévu au moins deux rangées de tubes plats (6) qui sont traversés au cours du fonctionnement en flux croisés ou au cours du fonctionnement en flux croisés opposés servant à l'air de suralimentation à refroidir et / ou **en ce que** différentes chambres des tubes plats sont traversées au cours du fonctionnement en flux croisés.

5. Refroidisseur d'air de suralimentation selon l'une quelconque des revendication précédentes, **caractérisé en ce que** les différents composantes du refroidisseur d'air de suralimentation (1) sont assemblés les uns aux autres par brasage.

6. Refroidisseur d'air de suralimentation selon l'une quelconque des revendications précédentes, **caractérisé en ce que** des générateurs de turbulences sont disposés dans les tubes plats (6).

7. Refroidisseur d'air de suralimentation selon l'une quelconque des revendications précédentes, **caractérisé en ce que** les tubes plats (6) se terminent dans au moins un banc collecteur (2, 9).

8. Refroidisseur d'air de suralimentation selon la revendication 7, **caractérisé en ce que** le bac collecteur (2) présente un fond (7) comportant des ouvertures qui correspondent aux dimensions extérieures des tubes plats (6), et fond avec lequel sont brasés les tubes plats (6).

9. Refroidisseur d'air de suralimentation selon l'une quelconque des revendications précédentes, **caractérisé en ce que** des ailettes ondulées (8) sont prévues entre les tubes plats (6).

10. Refroidisseur d'air de suralimentation selon l'une quelconque des revendication précédentes, **caractérisé en ce que** le moyen de refroidissement est un liquide, en particulier de l'eau.

11. Refroidisseur d'air de suralimentation selon l'une quelconque des revendications précédentes, **caractérisé en ce qu'**il est prévu au moins une caisse à air servant au guipage de l'air de suralimentation.

12. Refroidisseur d'air de suralimentation selon l'lune quelconque des revendications précédentes, **caractérisé en ce que** le apport de la hauteur du conduit d'air de suralimentation (HL), relativement à la hauteur du conduit du moyen de refroidissement (HK), va de 1:1 à 10:1, en particulier de 2:1 à 8:1.
